# EUROPÄISCHE PATENTSCHRIFT

(11) **EP 0 967 591 B1**
(45) Veröffentlichungstag und Bekanntmachung des Hinweises auf die Patenterteilung: **04.08.2004**
(21) Anmeldenummer: 99110021.5
(22) Anmeldetag: 21.05.1999
(51) Int. Cl.: G01V 3/15, G10K 9/22

(54) **Sondenvorrichtung**
Transducer assembly
Dispositif transducteur

(30) Priorität: 25.06.1998 DE 29811404 U
(43) Veröffentlichungstag der Anmeldung: 29.12.1999
(73) Patentinhaber: Ebinger, Klaus, D-51149 Köln (DE)
(72) Erfinder: Ebinger, Klaus, 51143 Köln (DE)
(74) Vertreter: Heim, Hans-Karl, Dipl.-Ing.

(56) Entgegenhaltungen:
- EP-A- 0 767 390
- US-A- 3 836 842
- US-A- 4 163 877
- US-A- 5 111 509

## Beschreibung

Die Erfindung betrifft eine Sondenvorrichtung mit einem Rohr, in welchem elektronische Bauteile angeordnet sind, mit einem in dem Rohr angeordneten akustischen Signalgeber und mit einer an dem Rohr vorgesehenen seitlichen Öffnung für den Austritt der von dem akustischen Signalgeber erzeugten Schallwellen.

Derartige Sondenvorrichtungen sind bekannt und haben sich insbesondere aufgrund ihrer guten Handhabbarkeit bewährt, so daß der Wunsch besteht, die gattungsgemäßen Sondenvorrichtungen in vielfältiger Weise und auf zahlreichen Anwendungsgebieten zum Einsatz zu bringen.

Bei Suchgeräten in Rohrform oder bei in Rohrform ausgebildeten Modulsystemen ist es stets problematisch ein Bedienfeld in günstiger Weise anzuordnen, so daß die gute Handhabbarkeit des Gerätes unterstützt wird. Ferner ist es schwierig, einen akustischen Signalgeber in einer Weise anzuordnen, daß er einerseits geschützt ist, andererseits aber ein möglichst lautes akustisches Signal abgeben kann. Insbesondere würden überstehende oder aufgebaute Teile die gute Handhabbarkeit stören; ferner wären mechanische Beschädigungen an diesen vorstehenden Elementen unumgehbar.

Die gute Qualität der akustischen Anzeige ist besonders wichtig, da Suchgeräte mitunter im Dauereinsatz verwendet werden; insbesondere kann bei einer mit der Sondenvorrichtung durchgeführten Kampfmittelräumung eine hinreichende Sicherheit der Bedienungspersonen nur dadurch erreicht werden, daß ein akustisches Signal mit einem hinreichenden Volumen bereitgestellt wird, welches auch in lautstarker Umgebung, beispielsweise in Nähe einer Straße, deutlich vernehmbar ist. In diesem Zusammenhang ist auch die Wichtigkeit der individuellen Einstellmöglichkeit des akustischen Signals zu nennen, sowohl die Lautstärke als auch die Frequenz des Signals betreffend. Die Lautstärke soll vorzugsweise in Abhängigkeit der Umgebungsgeräusche und des Hörvermögens der Bedienperson einstellbar sein; ebenfalls ist die Wahrnehmungsfähigkeit von akustischen Signalen mit verschiedenen Frequenzen stark altersabhängig, woraus sich die Vorteile einer Einstellbarkeit der Signalfrequenz ergeben.

In EP 0 767 390 A2 ist eine gattungsgemäße Sondenvorrichtung beschrieben, bei der zur Erzielung einer besonders guten Handhabbarkeit ein Endbereich eines Tragrohrs drehbar ausgebildet ist, wobei durch Drehung ein interner Stufenschalter betätigt werden kann.

In US-4,163,877 ist eine stabförmige Detektorvorrichtung zum Nachweis magnetischer Objekte offenbart, an deren einem Ende zur Abgabe eines Nachweissignals ein Lautsprecher angeordnet ist.

Gegenstand der US-3,836,842 ist eine Suchvorrichtung, bei der zur Abgabe eines Schallsignals ein Piezo-Wandler als Schallgeber verwendet wird.

Der vorliegenden Erfindung liegt daher die **Aufgabe** zugrunde, eine Sondenvorrichtung zur Verfügung zu stellen, welche bei verschiedenen Suchgeräten und insbesondere in Verbindung mit einem VLF-Empfänger ("very low frequency") verwendbar ist; ferner soll ein Sensorgehäuse geschaffen werden, welches im Hinblick auf seine Bedienbarkeit und die Qualität der akustischen Signalgabe verbessert ist.

Diese Aufgabe wird durch die Sondenvorrichtung mit den Merkmalen des Anspruchs 1 gelöst.

Eine Sondenvorrichtung der oben genannten Art ist erfindungsgemäß dadurch weitergebildet,
- dass der akustische Signalgeber koaxial in dem Rohr so angeordnet ist, dass ein Resonanzraum für die von dem akustischen Signalgeber erzeugten Schallwellen entsteht,
- dass der Resonanzraum so dimensioniert ist, dass ein Signal in einem gewünschten Frequenzbereich bevorzugt verstärkt wird und
- dass die seitliche Öffnung gleichzeitig eine Einstellmulde bildet, in der ein Einsteller koaxial angeordnet ist.

Damit kommt es zu einem Resonatoreffekt, wenn der zur Verfügung stehende Schallraum der Eigenfrequenz der von dem akustischen Signalgeber ausgestrahlten Schallwelle entspricht. Dementsprechend werden von großen Resonanzräumen niedrige Frequenzen bevorzugt verstärkt, während bei kleinen Resonanzräumen vorzugsweise hohe Frequenzen verstärkt werden.

Die Sondenvorrichtung ist so gestaltet, daß an dem Rohr eine seitliche Öffnung für den Austritt der von dem akustischen Signalgeber erzeugten Schallwellen vorgesehen ist. Durch die seitliche Anordnung dieser Öffnung ist die Ausbildung eines Resonanzraumes in besonders günstiger Weise zu bewerkstelligen.

Die seitliche Öffnung ist gleichzeitig eine Einstellermulde, in welcher ein Einsteller koaxial angeordnet ist. Diese Integration von Funktionen der seitlichen Öffnung ermöglicht eine besonders kompakte Bauweise der Sondenvorrichtung.

Bevorzugt wird der Resonanzraum in der Einstellermulde durch den Einsteller und den akustischen Signalgeber begrenzt. Damit ist wiederum eine Integration bereitgestellt, da die ohnehin vorhandenen Bauteile gleichzeitig Begrenzungen des Resonanzraumes bilden.

Der Resonanzraum ist so dimensioniert, daß die Signalgabe in einem gewünschten Frequenzbereich verstärkt wird. Damit ist es möglich, abhängig von der gewünschten Signalfrequenz, den Resonanzraum in einer Weise zu gestalten, daß eine möglichst gute akustische Wiedergabe der Signalfrequenz erreicht wird.

Es ist bevorzugt, den Resonanzraum als U-förmige Ausfräsung bereitzustellen. Diese Art der Anbringung der seitlichen Öffnung, welche zumindest teilweise den Resonanzraum bildet, ist fertigungstechnisch besonders einfach.

Als akustischer Signalgeber kann ein Lautsprecher verwendet werden. Mit einem solchen, durch den Lautsprecher zur Verfügung gestellten dynamischen System können verschiedenste Frequenzen übertragen werden.

In einer weiteren vorteilhaften Ausführungsform ist als akustischer Signalgeber ein Piezo-System vorgesehen. Dieses zeichnet sich durch seine Robustheit und Langlebigkeit aus.

Vorzugsweise ist das akustische System in dem Rohr schwallwasserdicht und stoßgeschützt untergebracht. Dies ist besonders wichtig beim Einsatz der Vorrichtung unter widrigen äußeren Bedingungen.

Als Empfangsfrequenz wird bevorzugt eine Frequenz von ca. 60 kHz verwendet. Eine Frequenz in diesem Bereich hat sich beim Betrieb von VLF-Empfängern bewährt.

Es ist vorteilhaft, wenn die Einstellermulde von einer in Umfangsrichtung des Rohres verdrehbaren Schutzklammer umgeben ist, welche durchsichtig ist und einen Schallöffnungsschlitz aufweist, so daß der sich in der Einstellermulde befindliche Bedienbereich durch die Schutzklammer mechanisch geschützt wird und die Signallautstärke und/oder die Signalfrequenz durch Verdrehen der Schutzklammer beeinflußt werden können. Damit ist eine wirkungsvolle Abschirmung des Bedienbereiches durch äußere Einflüsse gegeben, welche zudem in einfacher Weise herstellbar ist. Ferner bietet die Schutzklammer durch ihre Ausgestaltung mit einem Schallöffnungsschlitz die Möglichkeit der Aussendung gut wahrnehmbarer akustischer Signale.

Ferner ist vorteilhaft, wenn die Position des akustischen Signalgebers im Resonanzraum anwendungs- bzw. frequenzspezifisch verändert werden kann. Damit kann je nach den äußeren Bedingungen und/oder den Fähigkeiten der Bedienperson das akustische Signal entsprechend verändert werden, während die günstigen Bedingungen, welche durch die Bereitstellung des Resonanzraumes vorliegen, aufrechterhalten werden.

Weiter ist bevorzugt, mit einer an dem Rohr umlaufenden Ringnut die Möglichkeit zu schaffen, ein Typenschild und/oder eine Bedienungsanleitung anzubringen. Somit kann die Bedienperson jederzeit auf die Bedienungsanleitung zugreifen; ferner ist diese durch die versenkte Anbringung griffgeschützt und daher gegen griffbedingte Abnutzung gesichert.

Vorzugsweise ist das Sensorgehäuse, d.h. der Teil des Rohres, in welchem sich u.a. die Einstellermulde befindet, an den Stirnseiten mit Steck- und/oder Schraubflanschen versehen, die als Sonden- und/oder Batterieanschluß dienen. Damit ist eine rasche Auswechselbarkeit von Bauteilen ermöglicht, beispielsweise im Falle von Defekten oder zum Zwecke des Austausches einer Ringsonde gegen eine Stabsonde.

Der Erfindung liegt die überraschende Erkenntnis zugrunde, daß ein VLF-Empfänger in einem normalen Handsondengehäuse verwendet werden kann, wodurch ein völlig neuer Gerätetyp entsteht, der beispielsweise für die Kabelortung eingesetzt werden kann. Die erfindungsgemäßen Neuerungen können aber auch bei Metallsuchgeräten ihre Vorteile entfalten. Durch die Maßnahme, daß aufgrund der speziellen Anordnung von Bauteilen ein Resonatoreffekt entsteht, ist die akustische Signalgabe in besonders günstiger Weise realisierbar. Das Suchgerät kann mit verschiedenen Sonden betrieben werden, welche wechselbar sind. Beispielsweise können Ring- oder auch Stabsonden eingesetzt werden. Ferner ist das Gehäuse so gestaltet, daß ein Verlängerungsrohr aufgeschraubt werden kann, um z.B. - unter Einsatz einer Stabsonde - in einem Erdloch eine genaue Höhenlokalisation eines Kabels vorzunehmen. Das Suchgerät wird vorzugsweise auf eine Empfangsfrequenz von 60 kHz abgeglichen. Die empfangenen Signale werden einem hochempfindlichen Selektivverstärker mit akustischer Tonumsetzung zugeführt. Die empfangene Wechselspannung wird demnach gleichgerichtet und als DC-Steuerspannung einer VCO-Schnittstelle als Tonumsetzung zugeführt. Die koaxial angeordneten Komponenten - nämlich beispielsweise ein Einstellknopf sowie der akustische Signalgeber selbst - begrenzen einen Resonanzraum, der in einer Weise gestaltet werden kann, daß gewünschte Frequenzen bevorzugt verstärkt werden.

Die Erfindung wird anhand der folgenden Beschreibung sowie den beigefügten Zeichnungen erläutert. Dabei zeigt:
- Fig. 1: eine Draufsicht auf eine Sondenvorrichtung gemäß der Erfindung;
- Fig. 2: eine Draufsicht auf einen Teil einer Sondenvorrichtung, teilweise geschnitten;
- Fig. 3: einen Teil der Sondenvorrichtung nach Fig. 2 in Draufsicht; und
- Fig. 4: ein Blockschaltbild eines VLF-Empfängers.

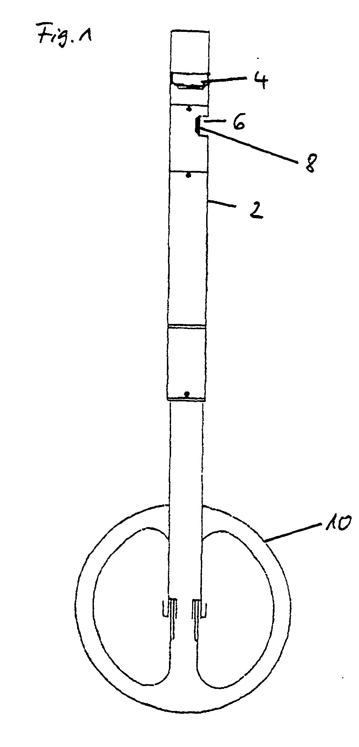

Fig. 1 zeigt eine Draufsicht einer Sondenvorrichtung. Diese weist im wesentlichen eine Ringsonde 10 auf, die gelenkig an einem Rohr 2 befestigt ist. An dem Rohr 2 ist eine seitliche Öffnung 6 zu erkennen, die gleichzeitig als Einstellermulde sowie als Resonanzraum wirkt. In der Einstellermulde 6 ist ein Einsteller 8 vorgesehen. Der Einsteller 8 und ein akustischer Signalgeber 4, welcher ebenso wie der Einsteller 8 koaxial in dem Rohr 2 angeordnet ist, bilden Begrenzungen für den Resonanzraum 6.

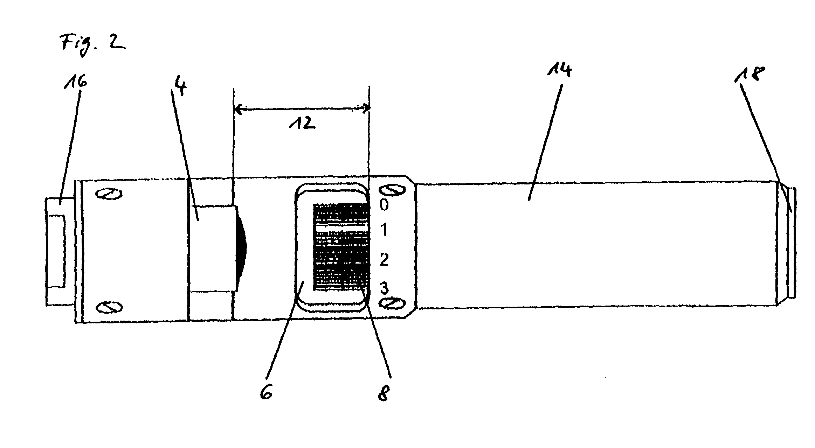

In Fig. 2 sind Einzelheiten des Teils des Sensorgehäuses gezeigt, welcher die für die vorliegende Erfindung zentralen Komponenten aufweist. Der Gehäusebereich beherbergt den akustischen Signalgeber 4. Ferner ist die seitliche Öffnung 6 zu erkennen, welche gleichzeitig die Einstellermulde darstellt. Innerhalb der Einstellermulde 6 ist ein Einsteller 8 vorgesehen. Der innerhalb des Gehäuses gebildete Resonanzraum 12 ist durch einen Doppelpfeil angedeutet. Das Gehäuse umfaßt ferner einen Bereich, welcher elektronische Komponenten enthält; dieser ist als Elektronikzylinder 14 dargestellt. Endseitig an dem dargestellten Gehäusebereich sind ein Anschlußflansch 16 bzw. ein Sensoranschluß 18 vorgesehen.

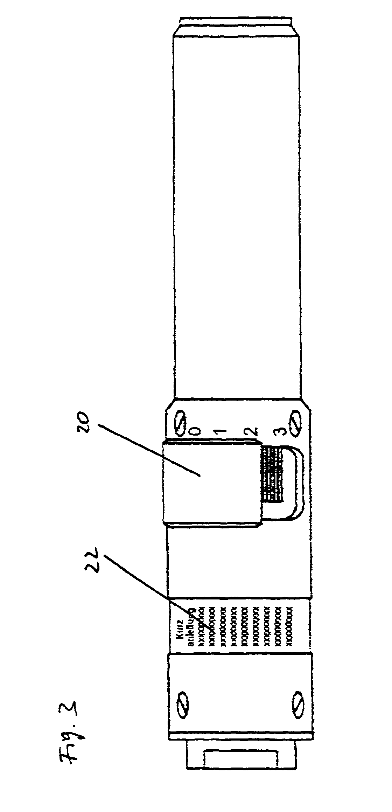

In Fig. 3 ist der Gerätebereich aus Fig. 2 in Draufsicht dargestellt. Neben den bereits in Zusammenhang mit Fig. 2 beschriebenen Komponenten sind eine Schutzklammer 20 sowie eine Ringnut 22 mit Kurzanleitung/Typenschild zu erkennen. Die Schutzklammer 20 ist in Umfangsrichtung des Rohres 2 verdrehbar und vorzugsweise durchsichtig. Ferner weist sie einen Schallöffnungsschlitz auf. Die Schutzklammer 20 dient dem mechanischen Schutz des Bedienbereiches, welcher sich in der Einstellermulde 6 befindet. Signallautstärke und/oder Signalfrequenz lassen sich durch Verdrehen der Schutzklammer 20 beeinflussen.

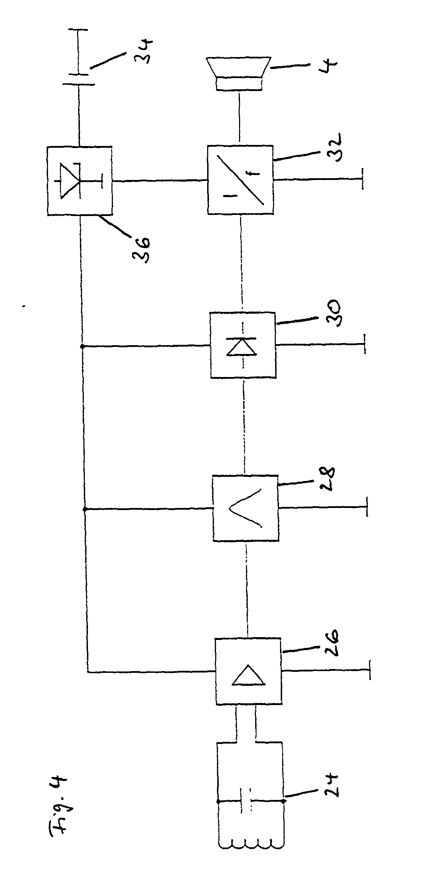

Fig. 4 zeigt ein Blockschaltbild, in welchem die wesentlichen Komponenten eines VLF-Empfängers dargestellt sind. Ein Empfängerschwingkreis 24, im wesentlichen bestehend aus Spule und Kondensator, ist über einen Verstärker 26 mit einem Filter 28 verbunden. Das von dem Filter 28 ausgegebene Signal wird einem Gleichrichter 30 zugeführt. Das DC-Ausgangssignal des Gleichrichters 30 wird über eine VCO-Schnittstelle 32 auf einen akustischen Signalgeber 4 übertragen. Der Verstärker 26, der Filter 28, der Gleichrichter 30 sowie die VCO-Schnittstelle 32 werden von einer Batterie 34 versorgt, wobei die Versorgungsspannung den genannten Komponenten über eine Stabilisierung 36 zugeführt wird.

## Patentansprüche

1. Sondenvorrichtung mit einem Rohr (2, 14), in dem elektronische Bauteile angeordnet sind,
mit einem in dem Rohr (2) angeordneten akustischen Signalgeber (4) und
mit einer an dem Rohr (2) vorgesehenen seitlichen Öffnung (6) für den Austritt der von dem akustischen Signalgeber (4) erzeugten Schallwellen,
**dadurch gekennzeichnet,**
- **dass** der akustische Signalgeber (4) koaxial in dem Rohr so angeordnet ist, dass ein Resonanzraum (12) für die von dem akustischen Signalgeber (4) erzeugten Schallwellen entsteht,
- **dass** der Resonanzraum (12) so dimensioniert ist, dass ein Signal in einem gewünschten akustischen Frequenzbereich bevorzugt verstärkt wird und
- **dass** die seitliche Öffnung (6) gleichzeitig eine Einstellmulde bildet, in der ein Einsteller (8) koaxial angeordnet ist.

2. Sondenvorrichtung nach Anspruch 1,
**dadurch gekennzeichnet,**
**daß** der Resonanzraum (12) in der Einstellmulde durch den Einsteller (8) und den akustischen Signalgeber (4) begrenzt wird.

3. Sondenvorrichtung nach einem der Ansprüche 1 oder 2,
**dadurch gekennzeichnet,**
**daß** die seitliche Öffnung (6) als U-förmige Ausfräsung ausgestaltet ist.

4. Sondenvorrichtung nach einem der vorangehenden Ansprüche,
**dadurch gekennzeichnet,**
**daß** der akustische Signalgeber (4) ein Lautsprecher ist.

5. Sondenvorrichtung nach einem der Ansprüche 1 bis 4,
**dadurch gekennzeichnet,**
**daß** der akustische Signalgeber (4) ein Piezo-System ist.

6. Sondenvorrichtung nach einem der vorangehenden Ansprüche,
**dadurch gekennzeichnet,**
**daß** der akustische Signalgeber (4) schwallwasserdicht und stoßgeschützt ist.

7. Sondenvorrichtung nach einem der vorangehenden Ansprüche,
**dadurch gekennzeichnet,**
**daß** die Empfangsfrequenz auf ca. 60 kHz abgeglichen ist.

8. Sondenvorrichtung nach einem der vorangehenden Ansprüche,
**dadurch gekennzeichnet,**
**daß** die Einstellermulde (6) von einer in Umfangsrichtung des Rohres (2) verdrehbaren Schutzklammer (20) umgeben ist, welche durchsichtig ist und einen Schallöffnungsschlitz aufweist, so daß der sich in der Einstellermulde (6) befindliche Bedienbereich durch die Schutzklammer (20) mechanisch geschützt wird und die Signallautstärke und/oder die Signalfrequenz durch Verdrehen der Schutzklammer (20) beeinflußt werden können.

9. Sensorvorrichtung nach einem der vorangehenden Ansprüche,
**dadurch gekennzeichnet,**
**daß** die Position des akustischen Signalgebers (4) im Resonanzraum (12) anwendungs- bzw. frequenzspezifisch veränderbar ist.

10. Sondenvorrichtung nach einem der vorangehenden Ansprüche,
**dadurch gekennzeichnet,**
**daß** an dem Rohr (2) eine Ringnut (22) mit darin versenkt angebrachter Kurzanleitung und/oder Typenschild vorgesehen ist.

11. Sondenvorrichtung nach einem der vorangehenden Ansprüche,
**dadurch gekennzeichnet,**
**daß** der die elektronischen sowie die signalgebenden Komponenten aufweisende Gehäuseteil an seinen Stirnseiten mit Steck- und/oder Schraubflanschen (16, 18) als Sonden- und/oder Batterieanschluß versehen ist.

## Claims

1. Probe assembly with a tube (2, 14) in which are located electronic components,
with an acoustic signal generator (4) located in the tube (2) and with a lateral opening (6), provided on the tube (2), for the emission of sound waves generated by the acoustic signal generator (4),
**characterized in that**
- the acoustic signal generator (4) is so coaxially positioned in the tube that a resonant space (12) is formed for the sound waves generated by the acoustic signal generator (4),
- the resonant space (12) is dimensioned in such a way that a signal is preferably amplified in a desired acoustic frequency range and
- the lateral opening (6) simultaneously forms an adjuster cavity in which is coaxially positioned an adjuster (8).

2. Probe assembly according to claim 1, **characterized in that** the resonant space (12) is bounded in the adjuster cavity by the adjuster (8) and the acoustic signal generator (4).

3. Probe assembly according to one of the claims 1 or 2, **characterized in that** the lateral opening (6) is milled out in U-shaped manner.

4. Probe assembly according to one of the preceding claims, **characterized in that** the acoustic signal generator (4) is a loudspeaker.

5. Probe assembly according to one of the claims 1 to 4, **characterized in that** the acoustic signal generator (4) is a piezoelectric system.

6. Probe assembly according to one of the preceding claims, **characterized in that** the acoustic signal generator (4) is splash-proof and shock-protected.

7. Probe assembly according to one of the preceding claims, **characterized in that** the reception frequency is balanced to approximately 60 kHz.

8. Probe assembly according to one of the preceding claims, **characterized in that** the adjuster cavity (6) is surrounded by a protective clip (20) rotatable in the circumferential direction of the tube (2) and which is transparent and has a sound opening slot, so that the operating area located in the adjuster cavity (6) is mechanically protected by the protective clip (20) and the signal volume and/or signal frequency can be influenced by rotating the protective clip (20).

9. Probe assembly according to one of the preceding claims, **characterized in that** the position of the acoustic signal generator (4) in the resonant space (12) is variable in application-specific and/or frequency-specific manner.

10. Probe assembly according to one of the preceding claims, **characterized in that** on the tube (2) is provided an annular groove (22) with brief instructions and/or a type plate fitted in countersunk manner therein.

11. Probe assembly according to one of the preceding claims, **characterized in that** the casing part having the electronic and signal-generating components is provided on its front ends with plug-in and/or screw flanges (16, 18) as a probe and/or battery terminal.

## Revendications

1. Dispositif des sondes avec un tube (2, 14) dans lequel des composants électroniques sont disposés,
avec un émetteur de signaux (4) acoustiques disposé dans le tube (2) et
avec une ouverture (6) latérale prévue sur le tube (2) pour la sortie des ondes sonores produites par l'émetteur de signaux (4) acoustiques,
**caractérisé en ce que**
- l'émetteur de signaux (4) acoustiques est disposé coaxialement dans le tube de manière à ce qu'un espace de résonance (12) soit formé pour les ondes sonores produites par l'émetteur de signaux (4) acoustiques,
- l'espace de résonance (12) est dimensionné de manière à ce qu'un signal soit amplifié de façon préférable dans une gamme de fréquence acoustique voulue et
- l'ouverture latérale (6) forme en même temps un creux de réglage dans lequel un dispositif de réglage (8) est disposé coaxialement.

2. Dispositif des sondes selon la revendication 1,
**caractérisé en ce que**
l'espace de résonance (12) est limité, dans le creux de réglage, par le dispositif de réglage (8) et l'émetteur de signaux (4) acoustiques.

3. Dispositif des sondes selon l'une des revendications 1 ou 2,
**caractérisé en ce que**
l'ouverture latérale (6) est conçue en tant que fraisure en forme de U.

4. Dispositif des sondes selon l'une des revendications précédentes,
**caractérisé en ce que**
l'émetteur de signaux (4) acoustiques est un haut-parleur.

5. Dispositif des sondes selon l'une des revendications 1 à 4,
**caractérisé en ce que**
l'émetteur de signaux (4) acoustiques est un système piézoélectrique.

6. Dispositif des sondes selon l'une des revendications précédentes,
**caractérisé en ce que**
l'émetteur de signaux (4) acoustiques est étanche aux projections d'eau et protégé contre les chocs.

7. Dispositif des sondes selon l'une des revendications précédentes,
**caractérisé en ce que**
la fréquence de réception est égalisée à env. 60 kHz.

8. Dispositif des sondes selon l'une des revendications précédentes,
**caractérisé en ce que**
le creux de réglage (6) est entouré d'une pince de protection (20) tournant dans la direction périphérique du tube (2) qui est transparente et qui présente une fente d'ouverture acoustique, de sorte que la zone de service située dans le creux de réglage (6) est protégée mécaniquement par la pince de protection (20) et l'intensité sonore des signaux et/ou la fréquence des signaux peuvent être influencées par la rotation de la pince de protection (20).

9. Dispositif des sondes selon l'une des revendications précédentes,
**caractérisé en ce que**
la position de l'émetteur de signaux (4) acoustiques est variable dans l'espace de résonance (12) de manière spécifique à l'application et à la fréquence.

10. Dispositif des sondes selon l'une des revendications précédentes,
**caractérisé en ce que**
le tube (2) comporte une rainure annulaire (22) avec brèves instructions et/ou plaque signalétique disposées de manière noyée dans celle-ci.

11. Dispositif des sondes selon l'une des revendications précédentes,
**caractérisé en ce que**
la partie du boîtier contenant les composants électroniques ainsi que composants émettant les signaux est munie, sur ses faces frontales, de brides enfichées et/ou vissées (16, 18) en tant que raccordement de la sonde et/ou de la batterie.
